# EUROPÄISCHE PATENTANMELDUNG

(11) **EP 3 933 529 A1**
(43) Veröffentlichungstag der Anmeldung: **05.01.2022**
(21) Anmeldenummer: 20182780.5
(22) Anmeldetag: 29.06.2020
(51) Int. Cl.: G05B 19/418

(54) **VERFAHREN UND ANORDNUNG FÜR EINE AUTOMATISIERTE TOPOLOGIEERKENNUNG EINER REGELEINRICHTUNG**

(71) Anmelder: Siemens Aktiengesellschaft, 80333 München (DE)
(72) Erfinder: Piel, Stefan, 45359 Essen (DE)

(57) **Zusammenfassung**

Gegenstand der vorliegenden Erfindung ist ein Verfahren für eine automatisierte Topologieerkennung einer Regeleinrichtung einer elektrischen Anlage, gekennzeichnet durch die mittels einer Rechneranordnung durchgeführten Schritte:
- Bereitstellen einer ersten Datenstruktur, die in der Regeleinrichtung vorhandene Signalverarbeitungskomponenten und deren Verbindungen beschreibt, und
- Bereitstellen einer Datenbank, in der für die Signalverarbeitungskomponenten jeweils Bestimmungsgleichungen hinterlegt sind, und
- Durchprüfen der ersten Datenstruktur, wobei für jede Signalverarbeitungskomponente die jeweiligen Bestimmungsgleichungen aus der Datenbank ausgelesen und in einer zweiten Datenstruktur abgelegt werden.

Ferner ist eine entsprechende Anordnung ein Gegenstand der Erfindung.

## Beschreibung

Die Erfindung betrifft ein Verfahren für eine automatisierte Topologieerkennung einer Regeleinrichtung gemäß dem Oberbegriff des Anspruchs 1 sowie eine Anordnung für eine automatisierte Topologieerkennung einer Regeleinrichtung gemäß dem Oberbegriff des Anspruchs 9.

Energieübertragungsnetze der Hoch- und Mittelspannungsebene werden über Leitstellensoftware gesteuert. Bei der Planung von Schalthandlungen, wie z.B. einem Öffnen eines Leistungsschalters oder dem Zuschalten einer Kondensatorbank zur Blindleistungskompensation, wird jedoch häufig eine Simulation des Betriebsverhaltens vorab durchgeführt, um dem Bediener der Leitstellensoftware eine Abschätzung der Auswirkungen seiner Handlungen auf das Gesamtsystem zu geben. Dabei muss auch berücksichtigt werden, wie elektrische Generatoren und brennstoffbetriebene Turbinen in Kraftwerken auf Änderungen im Energienetz reagieren werden. Die Generatoren und Turbinen weisen in den Kraftwerken i.d.R. eigene lokale Regeleinrichtungen auf. Beispielsweise kann eine Regeleinrichtung eine Brennstoffzufuhr zu einer Gasturbine über eine Ventilstellung als Ausgabesignal steuern, wenn als ein Eingabesignal eine Drehzahl einer Welle oder eine elektrische Ausgabeleistung des Kraftwerks vorgegeben wird.

Die Kenntnis über das Verhalten der Regeleinrichtungen in elektrischen Energieversorgungsnetzen ist eine wesentliche Voraussetzung zur kontrollierten Durchführung von Schaltmaßnahmen. Aufgrund unverhältnismäßig hoher Kosten, die bei der Überprüfung des Regelverhaltens in einem realen Netz entstehen würden, wird das Verhalten der Regeleinrichtungen in der Praxis durch geeignete Simulationsverfahren rechnerisch ermittelt.

Für die Simulation ist zu berücksichtigen, dass eine Regeleinrichtung i.d.R. verschiedene Komponenten für Signaleingang, -verarbeitung und -ausgabe, nachfolgend zusammenfassend Bausteine genannt, aufweist. Beispielsweise kann ein Baustein als Signalverstärker ein Eingabesignal um den Faktor 10 verstärken und als Ausgabesignal für den nächsten Baustein bereitstellen. Ferner werden häufig Filter-Bausteine eingesetzt, die in der Frequenzdomäne (z.B. sog. Fourier- oder Laplace-Raum) eine Manipulation von Signalen ermöglichen.

Zur Ermittlung eines zeitlichen Verlaufes des Regelsignals bzw. Ausgabesignals der Regeleinrichtung muss eine für die jeweilige Regeleinrichtung verwendete Topologie, d.h. eine charakteristische Anordnung der zugehörigen Bausteine und ihrer Verbindungen, in eine Reihe voneinander abhängiger computerausführbarer Anweisungen überführt werden. Diese werden nachfolgend für aufeinanderfolgende Zeitschritte von einem Rechnersystem ausgeführt.

Die Implementierung der erforderlichen Anweisungen auf einem Rechner zur Simulation des Regelverhaltens erfolgt bisher individuell für jede einzelne Regeleinrichtung durch die manuelle Erstellung der spezifischen Rechneranweisungen durch für diese Aufgabe ausgebildetes und in hohem Maße spezialisiertes Personal.

In der Praxis wird bisher beispielsweise die Software PSS SINCAL eingesetzt, bekannt aus der Broschüre "PSS^{®}SINCAL - All-in-one Simulation Software for the Analysis and Planning of Power Networks", Siemens AG 2018, Article Number: EMDG-B90038-00-7600--PSSSINCAL Brochure. Auf den Seiten 17 und 18 wird ein sog. "Graphical Model Builder" vorgestellt, d.h. eine Softwarekomponente, die es dem Bediener gestattet, beispielsweise eine Abfolge der Bausteine und zugehörigen Verbindungen einer Regeleinrichtung zu zeichnen. Hierdurch kann eine Topologie erfasst werden. Diese graphische Darstellung wird automatisch in eine Ausgabedatei bzw. Datenstruktur überführt, die die einzelnen Bausteine und ihre "Verschaltung" mittels Angabe der zugehörigen Verbindungen hinterlegt.

Um das Regelverhalten der Regeleinrichtung anschießend im Zusammenspiel mit dem Energienetz simulieren zu können, wird z.B. die Software PSS-E einsetzt, bekannt aus der Broschüre "PSS^{®}E - High-performance Transmission - Planning and Operations Software for the Power Industry", Siemens AG 2017, Article Number: EMDG-B10125-00-7600--PSSE Brochure. Dabei genügt es jedoch nicht, die o.g. Datenstruktur, die mithilfe des SINCAL-Programms erstellt wurde, zu verwenden. Es fehlen nämlich computerlesbare Anweisungen, die Schritt für Schritt ein "Durchlaufen" der einzelnen Bausteine unter Ausführen der jeweiligen mathematischen Bestimmungsgleichen zur Umwandlung von Input-Werten zu Output-Werten ermöglichen. Dies wird dadurch wesentlich komplexer, dass viele Regeleinrichtungen Rückkoppelungsschleifen zwischen nachgelagerten und vorgelagerten Bausteinen aufweisen. Bisher muss ein Benutzer daher manuell anhand der Datenstruktur jeweils einen solchen Baustein identifizieren und in einer Datenbank oder dem Internet recherchieren, welche mathematischen Bestimmungsgleichungen das Verhalten dieses Regelbausteins beschreiben und die Gleichungen in ein ausführbares Programm, z.B. in der immer noch weit verbreiteten Programmiersprache FORTRAN, schreiben. Die Verbindungen zwischen den Bausteinen müssen ebenfalls manuell unter Berücksichtigung von Rückkoppelungen programmiert werden. Enthält eine Regeleinrichtung beispielsweise mehrere Dutzend Bausteine zur Signalverarbeitung, so ist dieser manuelle Prozess sehr zeitaufwändig und fehleranfällig.

Bei späteren Überprüfungen des realen Regelverhaltens eines Generators im Vergleich zum simulierten Verhalten stellen sich des Öfteren deutliche Diskrepanzen heraus, die durch Fehler in der Programmierung des Regelverhaltens für die Simulation liegen.
Ausgehend von dem bekannten Verfahren für eine automatisierte Topologieerkennung einer Regeleinrichtung stellt sich an die Erfindung die Aufgabe, ein Verfahren anzugeben, mit dem eine computerausführbare Beschreibung der Regeleinrichtung vergleichsweise schnell und fehlerfrei erstellbar ist.

Die Erfindung löst die Aufgabe durch ein Verfahren gemäß Anspruch 1.

Eine Topologie im Sinne der Erfindung ist z.B. eine Beschreibung von Regelbausteinen sowie deren Verknüpfung in Form von Verbindungen zwischen diesen, d.h. welcher Baustein als Eingangssignal ein Ausgangssignal welchen anderen Bausteins erhält.

Eine Regeleinrichtung ist i.d.R. eine Software, die auf einer Rechnereinrichtung betrieben wird, oder eine spezifische Hardware. Die Regeleinrichtung wird typischerweise lokal bei der zu regelnden elektrischen Anlage vorgesehen und regelt dort die elektrische Anlage von einem aktuellen IST-Wert oder Messwert einer Regelgröße auf einen zukünftigen SOLL-Wert der Regelgröße ein. Eine Regelgröße kann beispielsweise eine Ventilstellung für eine Brennstoffzufuhr zu einer Turbine in einem Kraftwerk sein, beispielsweise für eine Gasturbine. Es kann sich auch um eine Wellen-Drehzahl oder um eine elektrische Größe wie eine Ausgabespannung eines mit der Turbine verbundenen Generators handeln. Andere geeignete elektrische Größen sind Wirkleistung und Blindleistung. Als elektrische Anlagen können neben Turbinen und Generatoren auch größere Lasten in Fragen kommen, die steuerbar sind.

Eine Rechneranordnung ist z.B. ein üblicher Computer oder Laptop. Es kann sich jedoch auch um eine Softwarekomponente handeln, die in einer Cloud-Einrichtung, also um über ein Datennetzwerk verknüpfte verteilte Datenspeicher- und Datenprozessorressourcen.

Bei der ersten Datenstruktur handelt es sich beispielsweise um eine Datei in einem vorgegebenen Dateiformat, z.B. eine HMTL- oder Textdatei.

Signalverarbeitende Bausteine einer Regeleinrichtung sind tatsächliche physikalische Bausteine oder in Software implementierte Algorithmen. Diese Bausteine haben Eigenschaften, mit denen sie ein Eingangssignal in ein Ausgabesignal umwandeln können. Dieser Umwandlungsprozess wird jeweils mit Bestimmungsgleichungen beschrieben. Verbindungen sind z.B. Zuordnungen eines Ausgangssignals eines Bausteins zu einem Eingang eines anderen Bausteins. Im Folgenden wird der Begriff Verknüpfung gleichbedeutend zum Begriff Verbindung verwendet.

Die Datenbank ist beispielsweise eine Zusammenstellung von Bezeichnungen der Bausteine und von Bestimmungsgleichungen zu deren funktioneller Beschreibung. Die Bezeichnungen und Bestimmungsgleichungen sind durch die IEEE normiert. Zusätzlich können computerausführbare Prozeduren für die Bestimmungsgleichungen in einer gängigen Programmiersprache hinterlegt sein. Typischerweise wird im Kraftwerksbereich aus historischen Gründen noch mit der Sprache FORTRAN gearbeitet. Es können jedoch z.B. auch andere Sprachen wie C++, Python oder Derivate dieser Sprachen genutzt werden.

Die zweite Datenstruktur ist z.B. eine Datei, die die Bestimmungsgleichungen und/oder die computerausführbaren Prozeduren auflistet. Auf dieser Basis kann vergleichsweise einfach eine Simulation des Regelverhaltens der gesamten Regeleinrichtung durchgeführt werden, weil mit einem Eingangssignal (z.B. einem SOLL-Wert) durch Ausführen aller Bestimmungsgleichungen ein Ausgabesignal für die elektrische Anlage erzeugt werden kann.

Es ist ein wesentlicher Vorteil des erfindungsgemäßen Verfahrens, dass computerausführbarer Code automatisiert erzeugt werden kann. Dadurch wird der Vorbereitungsprozess für die Simulation stark beschleunigt, was erhebliche Kosten einspart, und weitergehend menschliche Fehler vermieden, was in erheblichem Maße zur Reputation des bereitstellenden Unternehmens hinsichtlich der Verlässlichkeit seiner Produkte beiträgt.

In einer bevorzugten Ausführungsform des erfindungsgemäßen Verfahrens werden in der zweiten Datenstruktur die Bestimmungsgleichungen derart sortiert abgelegt, dass unter Berücksichtigung von Rückkoppelungsschleifen zwischen den Signalverarbeitungskomponenten die Bestimmungsgleichungen für vorgelagerte Signalverarbeitungskomponenten jeweils vor den Bestimmungsgleichungen für nachgelagerte Signalverarbeitungskomponenten auslesbar sind. Auf diese Weise wird sichergestellt, dass für eine korrekte Ausführung einer Bestimmungsgleichung für einen Baustein stets die benötigten Zwischenergebnisse als Input zur Verfügung stehen.

In einer weiteren bevorzugten Ausführungsform des erfindungsgemäßen Verfahrens wird mittels einer Simulationseinrichtung das Regelverhalten der Regeleinrichtung in einem Energienetz anhand der Bestimmungsgleichungen simuliert. Es kann beispielsweise das reale Energienetz zugrunde gelegt werden, das in späteren Schritten unter Berücksichtigung des Regelverhaltens der Regeleinrichtung gesteuert werden soll. Dies ist ein Vorteil, weil auch Wechselwirkungen des Energienetzes mit den Kraftwerken oder Lasten, die durch Regeleinrichtungen gesteuert werden, berücksichtigt werden können.

In einer weiteren bevorzugten Ausführungsform des erfindungsgemäßen Verfahrens werden mittels einer Leitstelle Steuerbefehle für steuerbare Betriebsmittel in dem Energienetz erstellt und zu den Betriebsmitteln übermittelt, wobei bei der Erstellung der Steuerbefehle das simulierte Regelverhalten der Regeleinrichtung berücksichtigt wird. Dies ist ein Vorteil, weil Auswirkungen von Steuerhandlungen einer Leitstelle, beispielsweise das Öffnen oder Schließen eines Schalters, und deren Rückwirkungen auf bzw. Wechselwirkungen mit Kraftwerken erkannt werden können. Unter Anderem kann eine Trägheit des Nachregelns der elektrischen Anlage durch die Regeleinrichtung berücksichtigt werden. Dies erleichtert dem Leitstellenpersonal die Entscheidung, ob eine Schalthandlung in der Realität zielführend ist und ausgeführt werden kann.

In einer weiteren bevorzugten Ausführungsform des erfindungsgemäßen Verfahrens werden beim Durchprüfen der ersten Datenstruktur Signalverarbeitungskomponenten und Verknüpfungen, die einen Signalübertragungsast in Richtung einer Ausgangskomponente bilden, als vorwärtsgerichtet markiert, und Signalverarbeitungskomponenten und Verknüpfungen, die einen Signalübertragungsast in Richtung einer bereits passierten und als vorwärtsgerichtet markierten Signalverarbeitungskomponente bilden, als rückgekoppelt markiert. Damit sind nach Abschließen der Prüfung alle Bausteine erfasst und alle Verbindungen entweder als vorwärtsgerichtet oder rückgekoppelt markiert. Dies ist ein Vorteil, weil auf einfache Weise die Abfolge der Komponenten "ertastet" werden kann.

In einer weiteren bevorzugten Ausführungsform des erfindungsgemäßen Verfahrens wird Verbindungen zwischen Signalverarbeitungskomponenten ein Ordnungsindex derart zugeordnet, dass beginnend mit der Verbindung hinter einer Eingangskomponente mit einem Start-Ordnungsindex, jeder weiteren Verbindung zwischen nachfolgenden Signalverarbeitungskomponenten eines Signalübertragungsasts fortlaufend jeweils ein um ein Inkrement erhöhter Ordnungsindex zugeordnet wird. Dies ist ein Vorteil, weil auf diese Weise leicht die korrekte Reihenfolge festgelegt werden kann, mit der die Bestimmungsgleichungen später in der zweiten Datenstruktur abgelegt und anschließend für die Simulation herangezogen werden müssen. Damit liegen für jede Bestimmungsgleichung bei Ausführung die benötigen Zwischenergebnisse aus vorgeordneten Bausteinen vor. Als Start-Ordnungsindex der Eingangs-Signalverarbeitungskomponente der Regeleinrichtung kann beispielsweise die natürliche Zahl 0 vorgesehen werden. Als Inkrement kann beispielsweise die natürliche Zahl 1 oder auch die Zahl 10 vorgesehen werden; letztlich kommt es nur auf die schrittweise bzw. inkrementelle Erhöhung des Index an.

Alternativ kann auch vorgesehen werden, mit einem negativen Inkrement, wie z.B. -1 oder -10, "herunterzuzählen". Beispielsweise könnte eine Reihenfolge der Ausführung der Bestimmungsgleichungen auch korrekt festgelegt werden, wenn mit einem Start-Ordnungsindex von 10000 begonnen würde und anschließend mit einem Inkrement von -1 fortgefahren würde. Entsprechend würde bei diesem Vorgehen mit dem höchsten Ordnungsindex begonnen werden anstatt mit dem Niedrigsten.

In einer weiteren bevorzugten Ausführungsform des erfindungsgemäßen Verfahrens wird der Verbindung am Ausgang von Signalverarbeitungskomponenten mit mehreren eingangsseitigen Verbindungen zu vorgeordneten Signalverarbeitungskomponenten ein um einen ersten Offset-Wert erhöhter Ordnungsindex zugeordnet. Als erster Offset-Wert kann beispielsweise ein Vielfaches des Inkrements eingesetzt werden, z.B. 1000. Durch das einmalige Erhöhen um den ersten Offset-Wert, also z.B. von einem Ordnungsindex 9 der Verbindung am Eingang einer Signalverarbeitungskomponente mit mehreren Eingängen auf 1009 (anstatt 10) für die Verbindung an deren Ausgang, wird sichergestellt, dass beim Zusammenführen der verzweigten Signalverarbeitungsäste die Verbindung am Ausgang der zusammenführenden Signalverarbeitungskomponente stets einen höheren Ordnungsindex als deren Eingangsverbindungen aufweist.

Bei Verwendung eines negativen Inkrements und eines negativen ersten Offset-Werts wird entsprechend ein niedrigerer Ordnungsindex sichergestellt.

In einer weiteren bevorzugten Ausführungsform des erfindungsgemäßen Verfahrens wird, wenn in einem Signalübertragungsast, für den bereits ein um einen Offset-Wert erhöhter Ordnungsindex vergeben wurde,
eine Signalverarbeitungskomponente mit mehreren eingangsseitigen Verbindungen zu vorgeordneten Signalverarbeitungskomponenten erkannt wird,
der Verbindung am Ausgang dieser Signalverarbeitungskomponente ein um einen zweiten Offset-Wert erhöhter Ordnungsindex zugeordnet, wobei der zweite Offset-Wert ein Bruchteil des ersten Offset-Werts ist.

Beispielsweise kann die Hälfte des ersten Offset-Werts für den zweiten Offset-Wert verwendet werden, also z.B. 500. Hierdurch wird sichergestellt, dass auch bei weiteren Verzweigungen innerhalb eines verzweigten Asts die Verbindung am Ausgang der zusammenführenden Komponente stets einen höheren Index aufweist als die Verbindungen an ihren Eingängen zu dem jeweils vorgeordneten Baustein.

Ausgehend von bekannten Anordnungen für eine automatisierte Topologieerkennung einer Regeleinrichtung stellt sich an die Erfindung die Aufgabe, eine Anordnung anzugeben, mit dem eine computerausführbare Beschreibung der Regeleinrichtung vergleichsweise schnell und fehlerfrei erstellbar ist.

Die Erfindung löst die Aufgabe durch eine Anordnung gemäß Anspruch 9. Bevorzugte Ausführungsformen sind in den abhängigen Ansprüchen 10 bis 15 beschrieben. Es ergeben sich für die erfindungsgemäße Anordnung und ihre Ausführungsformen sinngemäß die gleichen Vorteile wie eingangs für das erfindungsgemäße Verfahren erläutert.

Zur besseren Erläuterung der Erfindung zeigen in schematischer Darstellung die
- Figur 1: ein erstes Flussdiagramm für einen Startpunkt des Verfahrens, und
- Figur 2: ein zweites Flussdiagramm für einen Analyse von Regelbausteinen und ihren Verbindungen, und
- Figur 3: ein drittes Flussdiagramm für eine weitere Analyse von Regelbausteinen und ihren Verbindungen, und
- Figur 4: ein viertes Flussdiagramm für eine weitere Analyse von Regelbausteinen und ihren Verbindungen, und
- Figur 5: ein fünftes Flussdiagramm für eine weitere Analyse von Regelbausteinen und ihren Verbindungen, und
- Figur 6: ein erstes Ausführungsbeispiel für ein Durchprüfen einer Regeleinrichtung 200, und
- Figur 7: ein zweites Ausführungsbeispiel für ein Durchprüfen einer Regeleinrichtung 250, und
- Figur 8: ein sechstes Flussdiagramm für die Analyse von rückgekoppeltem Ästen, und
- Figur 9: ein siebtes Flussdiagramm für eine weitere Analyse von rückgekoppeltem Ästen, und
- Figur 10: ein achtes Flussdiagramm für eine weitere Analyse von rückgekoppeltem Ästen, und
- Figur 11: ein drittes Ausführungsbeispiel für eine Regeleinrichtung mit zwei unabhängigen Rückkoppelungsästen, und
- Figur 12: ein viertes Ausführungsbeispiel für eine Regeleinrichtung mit einer Rückkoppelungstiefe von 2, und
- Figur 13: eine bekannte Regeleinrichtung, und
- Figur 14: ein Ausführungsbeispiel für computerausführbaren Programmcode mit Bestimmungsgleichungen.

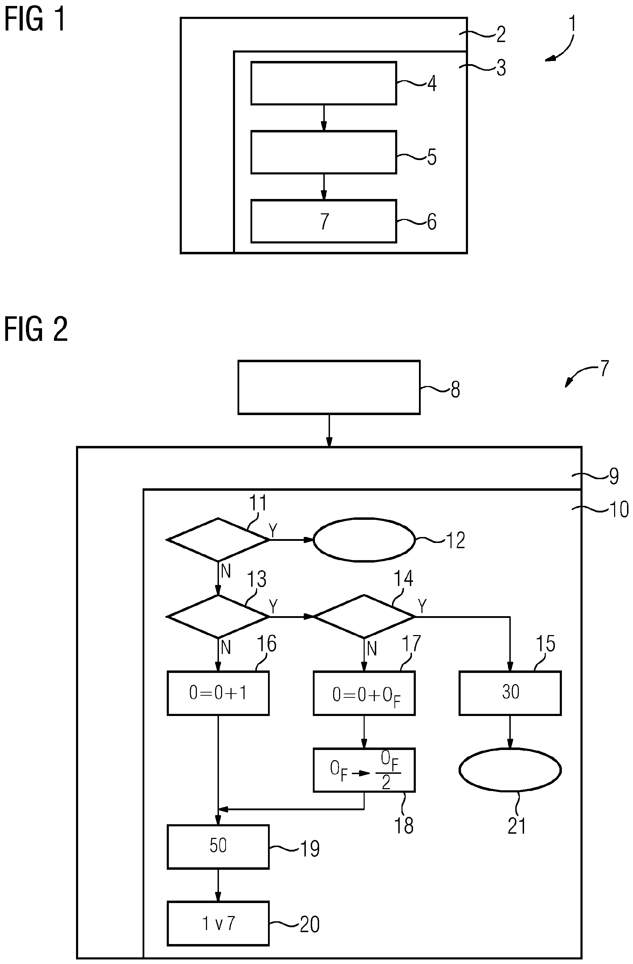

Im Folgenden werden einige Ablaufpläne bzw. Flowcharts für das erfindungsgemäße Verfahren vorgestellt, um Aspekte des Algorithmus zu erläutern. Dabei wird durchgehend eine Darstellung verwendet, bei der ein oben und links umgreifender Rahmen bedeutet, dass die umschlossenen Schritte mehrfach durchlaufen werden (sog. Schleife, z.B. Bezugskennzeichen 2 in Figur 1, bei dem Teilschritte im Feld 3 mehrfach iterativ für alle Eingangsbausteine angewendet werden). Teilschritte mit Entscheidungen (Ja = Y und Nein = N) sind mit Trapezen gekennzeichnet (z.B. Schritt 11 in Figur 2).

Der vorliegende Vorschlag beinhaltet ein automatisiertes Verfahren zur Ermittlung der internen Topologie einer Regeleinrichtung und darauf aufbauend zur Aufstellung der erforderlichen Bestimmungsgleichungen zur Ermittlung des Ausgangssignals des Reglers in einer Form, die eine unmittelbar nachfolgende Ausführung auf einem Rechnersystem ermöglicht.

Das hier vorgeschlagene Verfahren kann u.a. dazu verwendet werden, bei Einsatz in einem geschlossenen Regelkreis, der eine ständigen Aktualisierung der Eingangswerte der darin enthaltenen Regeleinrichtung in Abhängigkeit vom Ausgangssignal dieser Einrichtung beinhaltet, bei wiederholter Anwendung für aufeinanderfolgende Zeitpunkte das Ausgangssignal der Regeleinrichtung als Funktion der Zeit zu erhalten und damit weitergehend das Regelverhalten der Einrichtung zu ermitteln. Voraussetzung hierfür ist eine vorhergehende Initialisierung der Regeleinrichtung. Für diese Aufgabe kann die nachfolgend beschriebene Topologie-Ermittlung ebenfalls verwendet werden. Diese Initialisierung selbst wird jedoch nicht im Detail beschrieben, da sie mit fachüblichen Maßnahmen ohne Weiteres durchgeführt werden kann.

Für den Regelvorgang werden für einen gegebenen Zeitschritt einer nachfolgend vorausgesetzten Regeleinrichtung ein oder mehrere Eingangssignale zur weiteren Verarbeitung zugeführt. Die Regeleinrichtung selbst besteht dazu aus verschiedenen Komponenten für Signaleingabe, -verarbeitung und -ausgabe, nachfolgend Bausteine genannt, und den Verbindungen zwischen den Ein- und Ausgängen aufeinanderfolgender Bausteine mit der Besonderheit, dass eine verzweigende Verbindung den Ausgang eines Bausteins mit dem jeweiligen Eingang mehrerer parallel nachfolgender Bausteine verknüpft.

Konkret beinhaltet die betrachtete Regeleinrichtung einen oder mehrere Eingangsbausteine, einen oder mehrere signalverarbeitende Bausteine und einen Ausgangsbaustein. Abhängig von der spezifischen Aufgabenstellung kann ein solcher Baustein mehrere Eingänge besitzen; in dem hier vorausgesetzten Fall jedoch nur einen Ausgang.

In dem nachfolgend beschriebenen Verfahren werden die verschiedenen Bausteine in Richtung des Signalflusses durchlaufen; jeder Baustein besitzt dabei einen Status, der zu Beginn des nachfolgend beschriebenen Verfahrens mit dem Wert "Nicht-Passiert" initialisiert ist und nach Durchlaufen desselben auf den Wert "Passiert" gesetzt wird.

Die Kombination von Bausteinen und den diese verknüpfenden Verbindungen wird hier allgemein als Ast bezeichnet. Bausteine und Verbindungen, über die eingespeiste Signale direkt weiter in Richtung des Ausgangsbausteins weiterverarbeitet werden, bilden dabei die Komponenten eines Astes vom Typ "Vorwärts". Hierzu gehören insbesondere die Verbindung am Ausgang eines Eingangsbausteins sowie die Verbindung am Eingang des Ausgangsbausteins.

Umgekehrt werden Bausteine und Verbindungen, die das Signal zu einem zuvor von diesem bereits durchlaufenen Baustein zurückführen, als Äste vom Typ "Rückkopplung" bezeichnet. Der tatsächliche Typ eines Astes ist dabei definiert über den entsprechenden Typ der zugehörigen Verbindungen, der sich jeweils im Zuge der Anwendung des nachfolgend beschriebenen Verfahrens ergibt.

Zu Beginn ist der Typ aller Verbindungen, mit Ausnahme der Verbindungen am Ausgang von Eingangsbausteinen und am Eingang des Ausgangsbausteins (jeweils vom Typ "Vorwärts"), als "Undefiniert" vorbelegt und wird im Zuge der Anwendung des Verfahrens, aus dem sich u.a. die verschiedenen Äste und ihre jeweiligen Typen ergeben, auf den Wert "Vorwärts" oder "Rücckopplung" gesetzt.

In dem vorgeschlagenen Verfahren wird nun gemäß Figur 1 für alle Eingangsbausteine der Regeleinrichtung der Schritt 3 ausgeführt. Hierbei wird zunächst die Verbindung am Baustein-Ausgang gemäß Teilschritt 4 abgefragt. Dieser Verbindung wird im Teilschritt 5 für den Ordnungsindex, der für die später erforderliche Sortierung der Verbindungen benötigt wird, ein Wert von 0 zugeordnet. In Teilschritt 6 erfolgt dann der Aufruf der Analyse-Routine 7.

Die grundsätzliche Vorgehensweise der Analyse-Routine 7 besteht darin, dass jeweils über die nachfolgenden Verbindungen in Richtung des Signalflusses solange weitergeschritten wird, bis entweder auf einen Baustein getroffen wird, der sich infolge eines vorhergehenden Aufrufs der Analyse-Routine für einen anderen Eingangsbaustein bereits im Zustand "Passiert" befindet, (z.B. einer Verzweigung nachfolgend, s.u. spätere Ausführungen) oder der Ausgangsbaustein der Regeleinrichtung erreicht ist. Dabei wird der Zustand der dabei durchlaufenen Bausteine auf "Passiert" gesetzt.

Wird hierbei auf eine Verbindung getroffen, der zu den Eingängen mehrerer nachfolgender Bausteine verzweigt, werden nacheinander alle abgehenden Äste durchlaufen, wobei auf jeden einzelnen Ast das gleiche Verfahren wie zuvor auf den der Verzweigung vorangehenden Ast angewendet wird. Im Hinblick auf das Erreichen einer beliebigen Verzweigungstiefe wird (ohne Beschränkung der Allgemeinheit) vorgeschlagen, hierbei in rekursiver Weise vorzugehen.

Die einzelnen Schritte der Analyse-Routine 7 sind aus Figur 2 ersichtlich. Demzufolge wird beim Aufruf von Routine 7 in Schritt 8 zunächst damit begonnen, aus der aufrufenden Routine 1 gemäß Figur 1 den Baustein und die Verbindung an seinem Ausgang bereit zu stellen. Anschließend wird für alle Nachfolgerverbindungen 9 eine Schleife 10 ausgeführt, bei der zunächst im Teilschritt 11 überprüft wird, ob es sich um einen Ausgangsbaustein handelt. Ist dem so (mit "Y" gekennzeichnet), so wird dieser Schleifendurchlauf beendet 12.

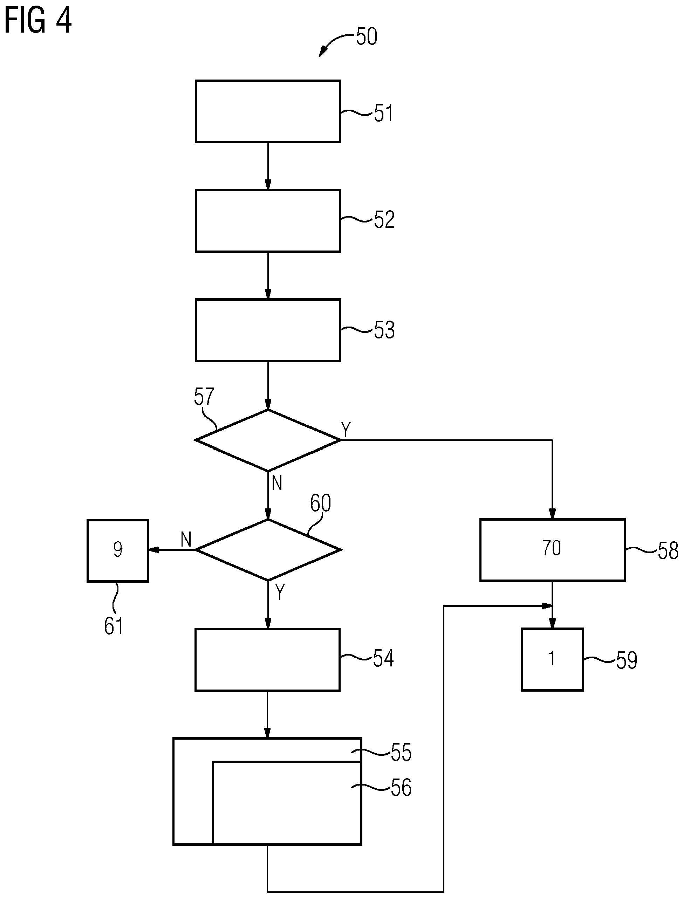

Handelt es sich um keinen Ausgangsbaustein (N), so wird in Schritt 13 überprüft, ob der Baustein mehr als einen Eingang besitzt. Ist demzufolge nicht mehr als ein Eingang vorhanden (N), so wird in Schritt 16 der Ordnungsindex für die Verbindung am Ausgang des Bausteins um ein vergleichsweise kleines Inkrement (z.B. um 1) erhöht und nachfolgend in Schritt 19 die untenstehend beschriebene Routine 50 gemäß Figur 4 aufgerufen, nach deren Beendigung in Schritt 20 entweder mit der nachfolgenden Verbindung (9) dieses Verfahrens 7 fortgefahren wird oder zum Anfang zurückgegangen wird, um das Verfahren 1 mit dem nächsten Eingangsbaustein (2) neu einzuleiten.

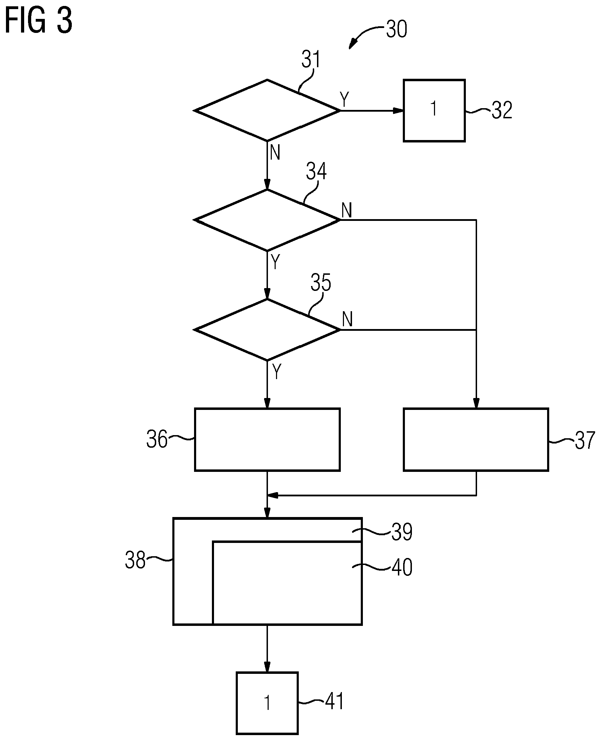

Besitzt der Baustein gemäß Schritt 13 hingegen mehrere Eingänge (Y), wird in Schritt 14 geprüft, ob der Baustein schon "Passiert" wurde. Ist dies der Fall (Y), so wird in Schritt 15 die untenstehend beschriebene Routine 30 gemäß Figur 3 aufgerufen und der Schleifendurchlauf beendet (21). Ist dies nicht der Fall (N), so wird in Schritt 17 ein Ordnungsindex O nach dem vorliegenden Vorschlag um einen vergleichsweise großen Offset-Wert 0_{F} (z.B. 1000) erhöht.

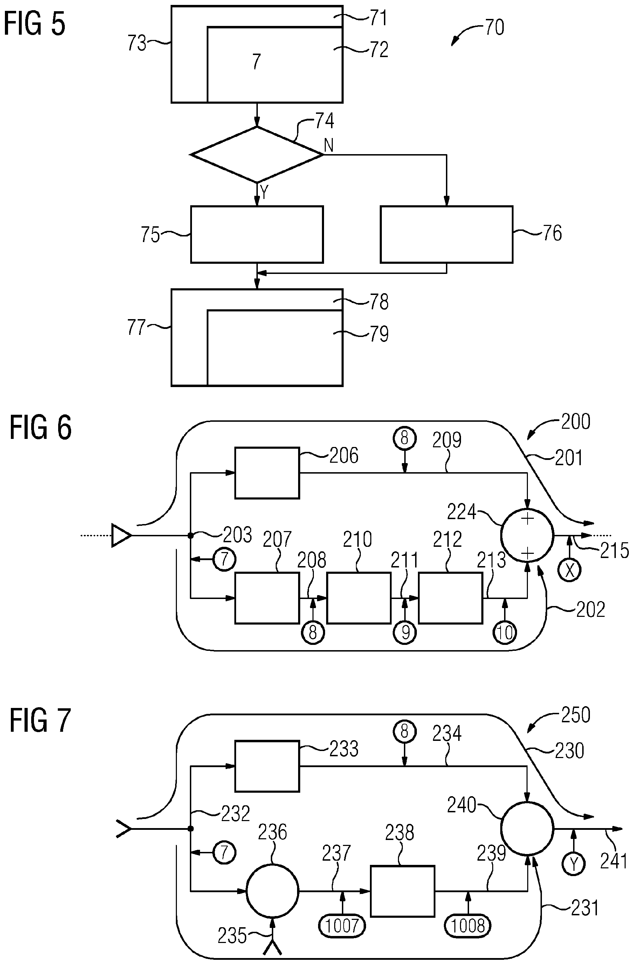

Würde der Offset hinter jedem Baustein immer um denselben konstanten Wert (z.B. 1) erhöht, würde gemäß dem Beispiel 200 in Figur 6 bei einem hier angenommenen Startwert 7 für die Verbindung 203 und Durchlaufen zunächst des oberen Zweiges (201) über Baustein 206, Verbindung 209 und Baustein 224 die Verbindung 215 am Ausgang von Baustein 224 den Ordnungsindex 9 besitzen. Nachfolgendes Durchlaufen des unteren Zweiges (202) über die Bausteine 207, 210 und 212 sowie die Verbindungen 208 und 211 würde für die Verbindung 213 am Eingang von Baustein 224 die Ordnung 10 ergeben und damit einen höheren Wert als für die Verbindung 215 am Ausgang von Baustein 224, was aufgrund der dem Vorschlag zugrunde liegenden Forderung nach einer eindeutigen, nach Ordnungsindex aufsteigenden Reihenfolge der durchlaufenen Verbindungen nicht statthaft wäre.

Nach dem vorliegenden Vorschlag sollte dabei in Schritt 18 der Offset-Wert 0_{F} nach Durchlaufen eines Bausteins mit mehreren Eingängen auf den halben Wert reduziert werden (z.B. 500) .

Würde der Offset des Ordnungsindex hinter einem Baustein mit mehreren Eingängen immer um den gleichen Wert (z.B. 1000) erhöht, würde gemäß dem Beispiel 250 in Figur 7 bei einem angenommenen Ordnungsindex von 7 für Verbindung 232 nach Durchlaufen zunächst des oberen Zweiges (230) über Baustein 233 und Verbindung 234 die Verbindung 241 am Ausgang des Bausteins 240 den Ordnungsindex 1008 besitzen. Nachfolgendes Durchlaufen des unteren Zweiges (231) über den Baustein 236 mit einem zweiten Eingang 235, die Verbindung 237 und den Baustein 238 würde für den Ordnungsindex der Verbindung 239 am Eingang des Bausteins 239 den Wert 1008 und damit den gleichen Wert wie für die nachfolgende Verbindung 241 am Ausgang von Baustein 240 ergeben, was aufgrund der dem Vorschlag zugrunde liegenden Forderung nach einer eindeutigen, nach Ordnungsindex aufsteigenden Reihenfolge der durchlaufenen Verbindungen ebenfalls nicht statthaft wäre.

Beide Forderungen stellen zusammen sicher, dass auch bei Verzweigungen und Rückkoppelungen die nachfolgende der durchlaufenen Verbindungen stets einen höheren Ordnungsindex aufweist als die eingehenden Verbindungen, was die spätere korrekte Sortierung der Bestimmungsgleichungen ermöglicht.

Der Offset selbst kann dabei für einfache Fälle durch einen elementaren Zahlentyp (2.8. 64-Bit-lnteger) repräsentiert sein; bei sehr komplexen Regeleinrichtungen mit einer Vielzahl von Bausteinen kann es hingegen erforderlich sein, einen zur Erweiterung des verfügbaren Zahlenraumes aus mehreren elementaren Zahlentypen zusammengesetzten Typ zu definieren. Des Weiteren wird es als hilfreich erachtet, als Initialwert des Offsets eine Potenz zur Basis 2 zu wählen.

Wie zuvor beschrieben für Schritt 16, führt auch Schritt 18 zum Schritt 19, in dem die Routine 50 gemäß Figur 4 aufgerufen wird, nach deren Beendigung auch hier in Schritt 20 entweder mit der nachfolgenden Verbindung (9) dieses Verfahrens 7 fortgefahren wird oder zum Anfang zurückgegangen wird, um das Verfahren 1 mit dem nächsten Eingangsbaustein 2 gemäß Figur 1 neu einzuleiten.

In der hier gemäß Figur 4 beschriebenen Routine 50 wird zunächst gemäß Schritt 51 der Zustand des zuletzt passierten Bausteins auf "Passiert" gesetzt. Nachfolgend wird gemäß Schritt 52 die Verbindung am Ausgang des Bausteins ermittelt und diesem gemäß Schritt 53 der aktuelle Wert des Ordnungsindex zugewiesen. Ist gemäß der Abfrage in Schritt 57 die Anzahl der Bausteine am Ende dieser Verbindung nicht größer als 1 (N) und die Verbindung endet gemäß Abfrage 60 nicht an einem Ausgangsbaustein (N), wird gemäß Schritt 61 mit der nächstfolgenden Verbindung (9) fortgefahren. Endet hingegen gemäß Abfrage 60 die Verbindung an einem Ausgangsbaustein (Y), wird dieser Verbindung gemäß Schritt 54 der Typ "Vorwärts" zugewiesen, ebenso wie gemäß Schritt 56 allen vorhergehenden Verbindungen (55) vom Typ "Undefiniert", um anschließend gemäß Schritt 59 das vorangehend beschriebene Verfahren 1 mit dem nächsten Eingangsbaustein 2 gemäß Figur 1 zu wiederholen.

Ist dagegen gemäß der Abfrage in Schritt 57 die Anzahl der Bausteine am Ende dieser Verbindung größer als 1 (Y), wird gemäß Schritt 58 mit der nachfolgend beschriebenen Routine 70 fortgefahren, um auch hier im Anschluss gemäß Schritt 59 das vorangehend beschriebene Verfahren 1 mit dem nächsten Eingangsbaustein 2 gemäß Figur 1 zu wiederholen.

In der hier gemäß Figur 5 beschriebenen Routine 70 ist der Typ der Verbindung hinter dem jeweiligen der Verzweigung unmittelbar nachfolgenden Baustein (71), ebenso wie der Typ aller nachfolgenden Verbindungen des jeweils abzweigenden Astes, zunächst "Undefiniert". Zu ihrer Bestimmung wird gemäß Schritt 73 nach dem vorliegenden Vorschlag für alle Bausteine (71) in Schritt 72 die Analyse-Routine 7 rekursiv aufgerufen mit dem Ergebnis eines definierten Verbindungstyps für die Verbindungen am Ausgang aller Bausteine (71). Ist gemäß Abfrage 74 dieser Verbindungstyp "Rückwärts" (Y), so wird dem Vorschlag zufolge gemäß Schritt 75 auch der allen Bausteinen (71) gemeinsamen Eingangsverbindung der Typ "Rückwärts" zugeordnet. Ist hingegen gemäß Abfrage 74 der Verbindungstyp "Vorwärts" für mindestens einen Baustein (71) (N), dann wird gemäß Schritt 76 auch der allen Bausteinen (71) gemeinsamen Eingangsverbindung der Typ "Vorwärts" zugeordnet. Nachfolgend wird gemäß Schritt 77 der gemäß Schritt 75 oder Schritt 76 zugeordnete Verbindungstyp in Schritt 79 allen Vorgängerverbindungen (78) vom Typ "Undefiniert" zugeordnet. Dieser Vorgang wird zu vorangehenden Verbindungen solange wiederholt, bis auf eine vorangehende Verzweigung getroffen wird, die einen bekannten Verbindungstyp ("Vorwärts" oder "Rückkoppelung") besitzt.

Vervollständigend hier nun noch die im vorangehend erwähnten Schritt 15 der Analyse-Routine 7 gemäß Figur 2 aufgerufene und gemäß Figur 3 beschriebene Routine 30. Ist gemäß Abfrage 31 die Eingangsverbindung des betrachteten und im Zustand "Passiert" befindlichen Bausteins vom Typ "Vorwärts" (Y), wird gemäß Schritt 32 das vorangehend beschriebene Verfahren (1) gemäß Figur 1 mit dem nächsten Eingangsbaustein (2) fortgesetzt. Andernfalls ist der Verbindungstyp "Undefiniert" (N) und es wird gemäß Abfrage 34 der Typ der Verbindung am Ausgang des Bausteins ermittelt. Ist die Verbindung am Ausgang des Bausteins vom Typ "Rückkopplung" (N), so wird dieser Typ in Schritt 37 auch der Eingangsverbindung des Bausteins zugewiesen. Ist der Verbindungstyp hingegen "Vorwärts" (Y), gilt gemäß Abfrage 35 weiter: Ist der Ordnungsindex der Eingangsverbindung des Bausteins kleiner als der Ordnungsindex seiner Ausgangsverbindung (Y), wird in Schritt 36 der Eingangsverbindung der Typ "Vorwärts" zugeordnet. Andernfalls (N) wird der Eingangsverbindung gemäß Schritt 37 der Typ "Rückkopplung" zugewiesen. Nach der Zuweisung des Verbindungstyps in Schritt 36 oder in Schritt 37 wird in Schritt 38 dieser Typ dann rückschreitend bis zum Erreichen der vorhergehenden Verzweigung allen Verbindungen 39 des betrachteten Astes zugewiesen 40, um anschließend in Schritt 41 die zuvor beschriebene Routine 1 gemäß Figur 1 mit dem nächsten Eingangsbaustein 2 fortzusetzen.

Nach erfolgter Bestimmung des Typs aller Verbindungen werden die Verbindungen vom Typ "Vorwärts" nach ansteigendem Ordnungsindex sortiert; hierbei ist es für das Ergebnis ohne Bedeutung, ob mehrere zueinander parallele Äste dieses Typs vorliegen.

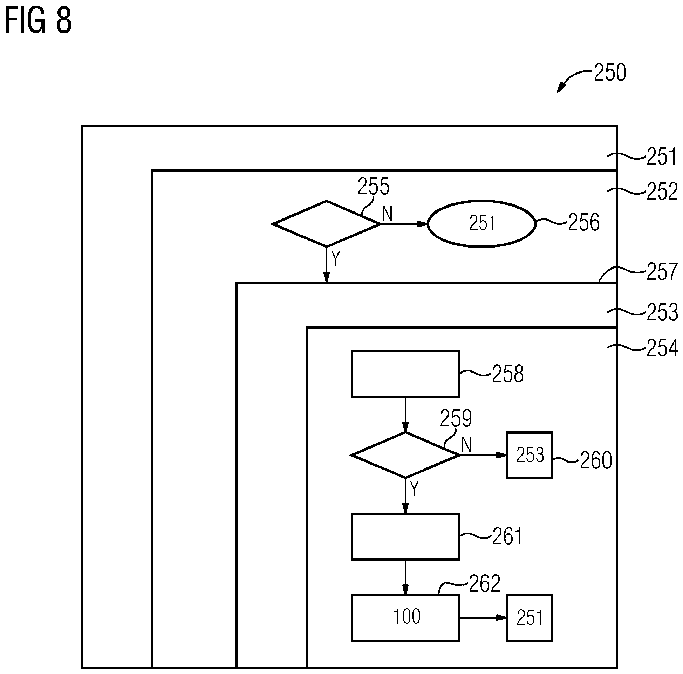

In dem allgemeinen Fall, dass die Regeleinrichtung eine Rücckopplung aufweist, werden anschließend alle Verbindungen vom Typ "Rückkopplung" in der nachfolgend vorgeschlagenen Weise in eindeutiger Weise voneinander unabhängigen Rückkopplungsästen zugeordnet, siehe hierzu auch Figur 8, 9 und 10. Zunächst wird in Routine 250 gemäß Figur 8 der Zustand aller Bausteine auf "Nicht passiert" zurückgesetzt. Anschließend werden, beginnend mit dem niedrigsten Ordnungsindex, alle Verbindungen vom Typ "Vorwärts" (251) durchlaufen. Ergibt gemäß Schritt 252 die Abfrage 255 nach einer Verzweigung, dass keine solche vorliegt (N), wird gemäß Schritt 256 mit der nächsten Verbindung 251 fortgefahren. Wird hingegen eine solche Verzweigung festgestellt (Y), werden in Schritt 257 zunächst alle Bausteine (253) am Verbindungsende ermittelt. Gemäß Schritt 254 wird dann für jeden dieser Bausteine (253) die Verbindung 258 am Ausgang des Bausteins ermittelt und in Schritt 259 der Verbindungstyp abgefragt. Ist die Verbindung nicht vom Typ "Rückkopplung" (N), wird gemäß Schritt 260 mit dem nächsten Baustein (253) fortgefahren. Ist der Typ hingegen "Rückkopplung" (Y), wird in Schritt 261 eine neue Rücckoppel-ID für den nachfolgenden Ast vergeben und in Schritt 262 die nachfolgend beschriebene Prozedur 100 unter Übergabe des aktuellen Bausteins (253) aufgerufen, nach deren Beendigung mit der nächsten Verbindung (251) fortgefahren wird.

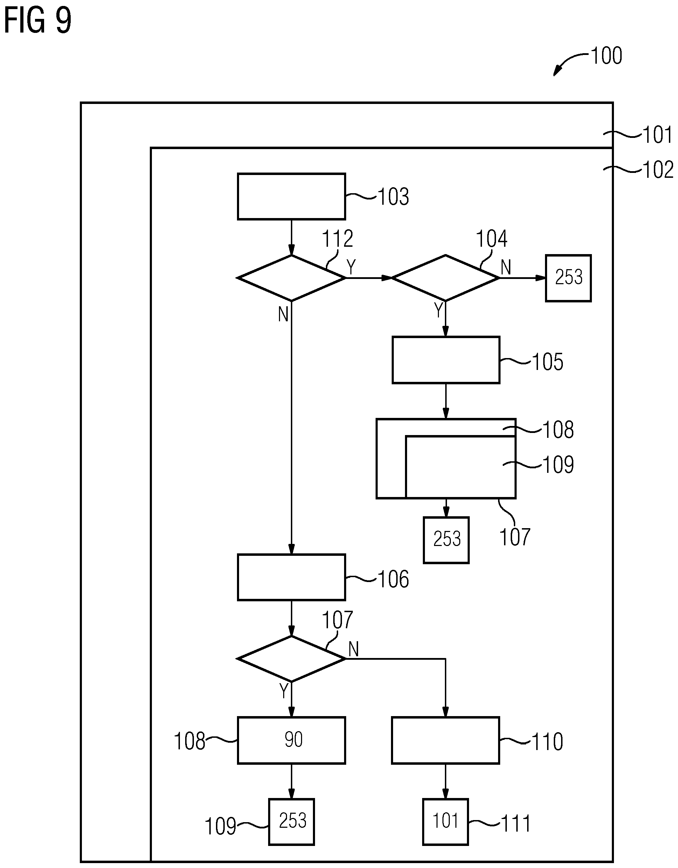

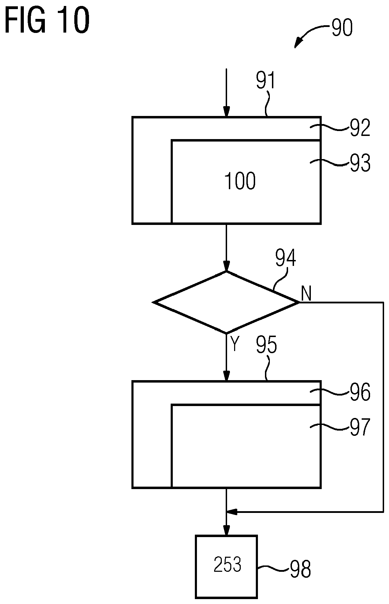

In Routine 100 gemäß Figur 9 wird gemäß Schritt 102 für den aktuellen Baustein 253 gemäß Figur 8 als erstem von möglichen Folgebausteinen (101) in Schritt 103 zunächst die Verbindung an dessen Ausgang ermittelt. Ist der Baustein gemäß der Abfrage 112 im Zustand "Nicht-Passiert" (N), wird die für den Zweig in Schritt 261 gemäß Figur 8 vergebene ID in Schritt 106 der in Schritt 103 ermittelten Verbindung zugeordnet. Ergibt die in Schritt 107 erfolgte Abfrage, dass die Anzahl der Bausteine am Verbindungsende gleich Eins ist (N), wird in Schritt 110 der Baustein am Verbindungsende ermittelt und gemäß Schritt 11 die Prozedur für diesen nun aktuellen Baustein (101) wiederholt. Ist gemäß der Abfrage 107 hingegen die Anzahl der Bausteine größer als Eins (Y), wird in Schritt 108 in der in Figur 10 beschriebenen Routine 90 gemäß Schritt 91 für alle Bausteine (92) in Schritt 93 die vorliegende Prozedur 100 in rekursiver Weise aufgerufen, die als Ergebnis mitteilt, ob die in Schritt 261 gemäß Figur 8 vergebene Rückkoppel-ID ersetzt worden ist. Ist dies gemäß der Abfrage 14 nicht der Fall (N), wird gemäß Schritt 98 mit dem nächsten Baustein 253 gemäß Figur 8 fortgefahren. Ist nach Abfrage 14 hingegen die Rückkoppel-ID ersetzt worden (Y), wird gemäß Schritt 95 rückwirkend für alle Verbindungen (96) des vorangehenden Zweiges deren bisherige Rückkoppel-ID gemäß Schritt 97 durch die neue ID ersetzt, um dann ebenfalls gemäß Schritt 98 mit dem nächsten Baustein 253 gemäß Figur 8 fortzufahren.

Ist der Baustein gemäß der Abfrage 112 hingegen im Zustand "Passiert" (Y), wird in Schritt 104 abgefragt, ob die Verbindung an seinem Ausgang vom Typ "Rückkopplung" ist. Ist dies nicht der Fall (N), wird mit dem nächsten Baustein 253 gemäß Figur 8 fortgefahren. Ist die Verbindung hingegen vom Typ "Rückkopplung" (Y), wird in Schritt 105 deren Rückkoppel-ID übernommen, um zunächst in Schritt 107 rückwirkend für alle Verbindungen (108) des vorangehenden Zweiges deren bisherige Rückkoppel-ID gemäß Schritt 109 zu ersetzen, um dann mit dem nächsten Baustein 253 gemäß Figur 8 fortzufahren.

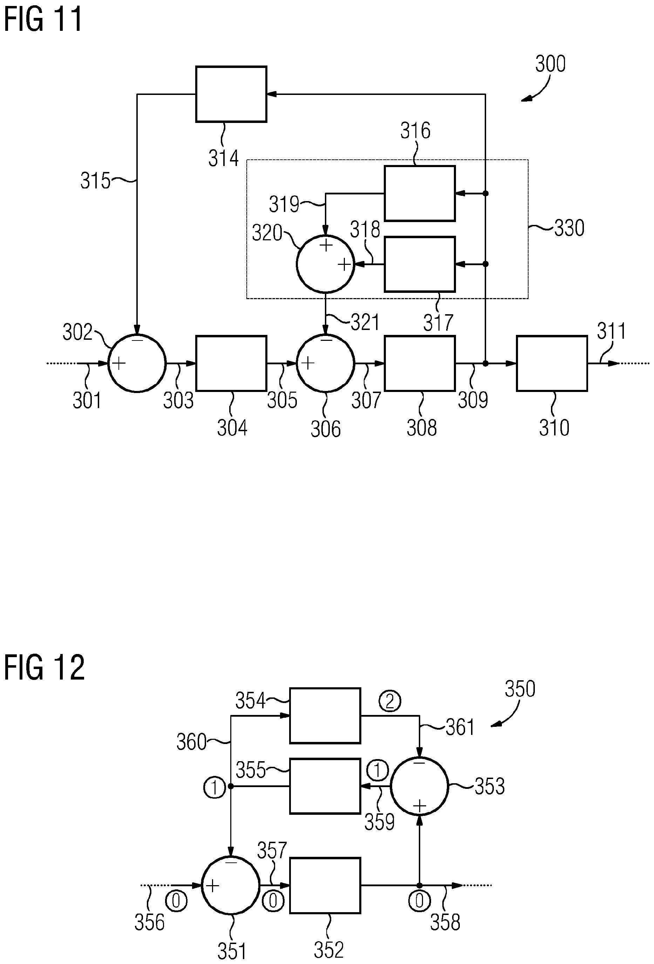

Figur 11 zeigt erläuternd ein Beispiel 300 für sowohl voneinander abhängige Rückkopplungsäste, die daher die gleiche Rückkopplungs-ID erhalten, als auch ein solches für Äste mit unterschiedlichen Rückkopplungs-ID's. Die Verbindung 309 am Ausgang von Baustein 308 zeigt eine Verzweigung zu den Bausteinen 310, 314, 316 und 317. Während der Baustein 310 das Signal über die Verbindung 311 in Vorwärtsrichtung weiterleitet, leiten die übrigen Bausteine das Signal in Rückwärtsrichtung auf vorhergehende Bausteine. Dabei speisen die Verbindung 318 des mit dem Baustein 317 beginnenden Rückkopplungsastes und die Verbindung 319 des mit dem Baustein 316 beginnenden Rückkopplungsastes in den gemeinsamen Baustein 320 ein, der über die Verbindung 321 das so rückgekoppelte Signal über den Baustein 306, der an seinem weiteren Eingang eine Verbindung 305 vom Typ "Vorwärts" besitzt und das Signal über die Verbindung 307 und den Baustein 308 in Vorwärtsrichtung weiterleitet, wieder in den Vorwärtszweig einspeist. Die Verbindungen 318, 319 und 321 erhalten damit die gleiche Rückkoppel-ID und sind zusammen mit den Bausteinen 316, 317 und 320 als gemeinsamer Rückkoppelast 300 in Figur 11 hervorgehoben.

Dahingegen speist der mit dem Baustein 314 beginnende Rücckoppelzweig über die Verbindung 315 über Baustein 302, der an seinem weiteren Eingang eine Verbindung 301 vom Typ "Vorwärts" besitzt und über die Verbindung 303 und den Baustein 304 das Signal in Vorwärtsrichtung weiterleitet, und damit eine andere Stelle in den Vorwärtszweig ein. Die Verbindung 315 erhält daher eine gegenüber den vorgenannten Verbindungen 318, 319 und 321 abweichende Rückkoppel-ID.

Anschließend werden für alle Rückkopplungsäste die zugehörigen Verbindungen nach ansteigendem Ordnungsindex sortiert und alle Verbindungen am Eingang eines Bausteins, dessen Ausgangsverbindung den Typ "Vorwärts" besitzt, werden in einem temporären Speicher abgelegt, der die zugehörigen Werte im darauffolgenden Zeitschritt zur Verfügung stellt.

Die so erhaltenen, voneinander unabhängigen Rückkopplungsäste werden nachfolgend dahingehend untersucht, ob sie ihrerseits eine Rückkopplung enthalten. Hierzu wird vorgeschlagen, für jede Verbindung einen Grad der Rückkopplung zu definieren, der mit dem Wert 0 initialisiert ist (keine Rückkopplung) und für die Verbindung der vorangehend besprochenen einfachen Rückkopplung auf den Wert 1 gesetzt wird.

Zunächst wird wieder der Zustand aller Bausteine auf "Nicht passiert" zurückgesetzt. In der Folge werden alle voneinander unabhängigen Rückkopplungsäste, beginnend hinter der zugehörigen Verzweigung, nach dem gleichen Verfahren gemäß Figur 1 wie vorangehend für die Vorwärtsrichtung beschrieben, durchlaufen. Für Verbindungen, die dabei auf einen Baustein mit Status "Passiert" und einem in diesem Schritt nicht erhöhten Rückkopplungsgrad treffen, wird der Rückkopplungsgrad dabei um den Wert 1 erhöht, im betrachteten Fall also auf den Wert 2.

Das vorangehend beschriebene Vorgehen wird anhand des Beispiels 350 in Figur 12 erläutert. Hier ist der Vorwärtszweig gegeben durch die in den Baustein 351 einspeisende Verbindung 356, die einzige in Baustein 352 einspeisende Verbindung 357 am Ausgang von Baustein 351 sowie die Verbindung 358 am Ausgang von Baustein 352. Nach Bestimmung der voneinander unabhängigen Rückkoppeläste für den Grad 1 besitzen die in Baustein 355 einspeisende Verbindung 359 am Ausgang von Baustein 353, die nachfolgende Verbindung 360 am Ausgang von Baustein 355 sowie die Verbindung 361 am Ausgang von Baustein 354 eine gemeinsame Rückkoppel-ID zum Rückkoppel-Grad 1. Durch Anwendung des vorangehend beschriebenen Verfahrens gemäß Schritt 1, angewandt auf den hier vorliegenden Rückkoppelzweig, wird der Verbindung 361 der gegenüber dem bisherigen maximalen Rückkopplungsgrad von 1 um den Wert 1 erhöhte Rückkopplungsgrad von 2 zugeordnet.
Nachfolgend werden die resultierenden Verbindungen mit Rücckopplungsgrad 2 wieder in der gleichen Weise weiterverarbeitet, wie dies bereits vorangehend für die Verbindungen mit Grad 1 beschrieben worden ist:
Ermittlung aller voneinander unabhängigen Rückkopplungsäste vom Grad 2 und Sortieren der zugehörigen Verbindungen nach steigendem Ordnungsindex sowie Ablage aller Verbindungen am Eingang von Bausteinen mit Ausgangsverbindungen des nächst niedrigeren Rückkopplungsgrades (hier: 1) in einem Speicher, der in diesem Fall die zugehörigen Werte im übernächsten Zeitschritt zur Verfügung stellt.

Im Hinblick auf die Tiefe des Speichers für diese Verbindungen ist zu beachten, dass dieser für Verbindungen vom Grad 2 im Allgemeinen bereits einen Wert für den unmittelbar nachfolgenden Zeitschritt beinhaltet, der nicht überschrieben werden darf; die Speichertiefe beträgt daher zwei Stellen für jede betroffene Verbindung vom Grad 2. Das beschriebene Verfahren zur Ermittlung und Behandlung höherer Rückkopplungsgrade wird nach diesem Vorschlag nachfolgend für alle Äste des jeweils vorhergehenden Rückkopplungsgrades solange wiederholt, bis die für die betrachtete Regeleinrichtung gegebene Rückkopplungstiefe erreicht ist. Dies ist daran erkennbar, dass für den nächst höheren Grad keine Rückkopplung mehr nachgewiesen wird. Im Hinblick auf die erforderliche Speichertiefe gilt, dass in der hier vorgeschlagenen Konvention der Wert des Rückkopplungsgrades der Anzahl von aufeinanderfolgenden Zeitschritten entspricht, für den Verbindungen des entsprechenden Astes zugeordnete Werte gespeichert werden müssen.

Zur Bestimmung des Ausgangssignals der Regeleinrichtung werden abschließend für die verschiedenen Verbindungen Bestimmungsgleichungen in einer auf einem Rechner ausführbaren Form erstellt. Die Reihenfolge der Gleichungen ist dabei durch die Abhängigkeiten der verschiedenen den Verbindungen zugeordneten Werte untereinander bestimmt.

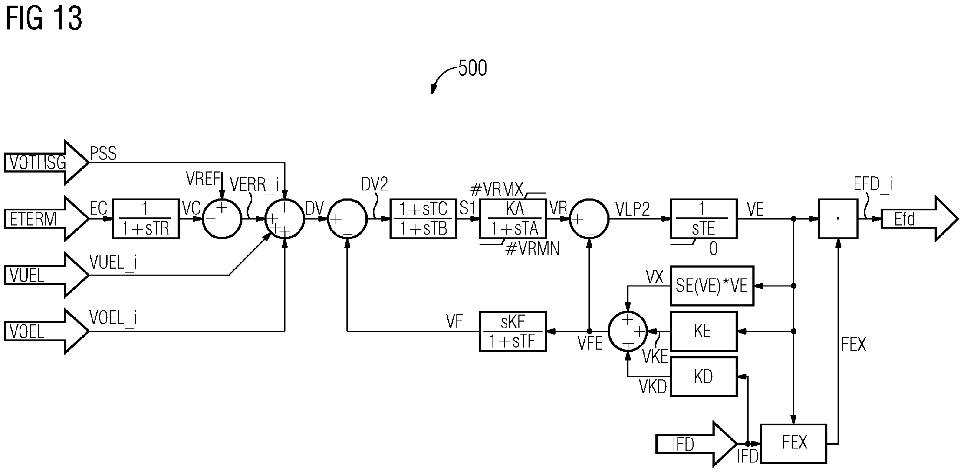

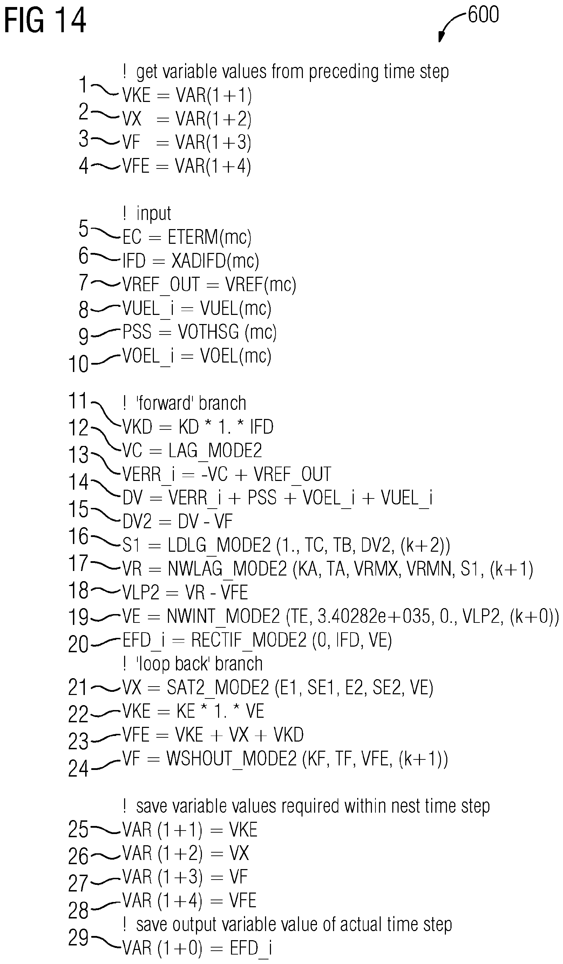

Zur besseren Verständlichkeit erfolgen die weiteren Erläuterungen beispielhaft anhand eines in Figur 13 gezeigten Standard-Reglers 500 und der für eben diesen erzeugten ProgrammCode 600 gemäß Figur 14.

Wenn die Regeleinrichtung einen oder mehrere Rückkopplungsäste enthält, werden zunächst, beginnend mit dem höchsten Rücckopplungsgrad, die gespeicherten Werte den jeweiligen Verbindungen zugeordnet. So wird z.B. für einen maximalen Rückkopplungsgrad von 2 zunächst der vor zwei Zeitschritten erhaltene Wert für alle entsprechenden Verbindungen mit Grad 2 aus dem entsprechenden Speicher entnommen.

Dieses Vorgehen wird für alle Rückkopplungsgrade mit abnehmendem Grad wiederholt. In dem vorliegenden Beispiel gemäß Figur 13/14 ist der maximale Rückkopplungsgrad vom Wert 1; in den Schritten 1 bis 4 gemäß Figur 14 wird den zugehörigen Verbindungen der jeweilige Wert aus dem unmittelbar vorhergehenden Zeitschritt zugewiesen.

Im Anschluss wird den Ausgangsverbindungen aller Eingangsbausteine der jeweilige Wert, z.B. ein aktueller Maschinen-Messwert, zugeordnet; für das vorliegende Beispiel geschieht dies in den Schritten 5 bis 10 gemäß Figur 14.

Nachfolgend werden, beginnend mit den Verbindungen mit dem niedrigsten Ordnungsindex, die Gleichungen für die Werte aller Verbindungen vom Typ "Vorwärts" in der durch ihren Ordnungsindex gegebenen Reihenfolge aufgestellt; für das vorliegende Beispiel sind dies die Schritte 11 bis 20 gemäß Figur 14.

Im Fall einer vorhandenen Rückkopplung innerhalb der Regeleinrichtung werden dann, beginnend mit Rückkopplungsgrad 1, zu jedem unabhängigen Rückkopplungsast die entsprechenden Gleichungen für alle Verbindungen dieses Astes aufgestellt, auch hier wieder entsprechend der mit steigendem Ordnungsindex vorgegebenen Reihenfolge. Dieser Schritt wird nachfolgend für alle Rückkopplungsäste zu sukzessiv höherem Grad der Rückkopplung hin solange wiederholt, bis die Rückkopplungstiefe der Regeleinrichtung erreicht ist. Im vorliegenden Beispiel mit der Rückkopplungstiefe vom Grad 1 erfolgt die Zuordnung zu den entsprechenden Verbindungen in den Schritten 21 bis 24 gemäß Figur 14.

Abschließend werden die aktuellen Werte der zu speichernden Verbindungen vom Typ "Rückkopplung" den entsprechenden Speichern zugeordnet. Dabei werden die Werte der Verbindungen mit Grad 1 dem Speicher für den folgenden Zeitschritt zugeordnet, diejenigen mit Grad 2 dem Speicher für den übernächsten Zeitschritt bis hin zur Zuordnung der Verbindungen mit Grad n (Rückkopplungstiefe) zum n-ten nachfolgenden Zeitschritt. Für das vorliegende Beispiel mit Rückkopplungstiefe 1 geschieht dies in den Schritten 25 bis 28 gemäß Figur 14.

Abschließend wird gemäß Schritt 29 in Figur 14 der aktuelle Wert der Verbindung am Eingang des Ausgabebausteins gespeichert.

Für die bislang erforderliche manuelle Erstellung der Bestimmungsgleichungen zur Ermittlung des Verhaltens von Regeleinrichtungen wird bisher hochqualifiziertes Personal gebunden. Der vorliegenden Erfindung gemäß können die Bestimmungsgleichungen dahingegen automatisiert in einer von einem Rechner unmittelbar ausführbaren Form erstellt werden, vgl. auch das ausgeführte Beispiel für einen Standard-Regler gemäß Figur 13/14. Der Anwender kann damit solche Aufgaben künftig vollständig programmgesteuert durchführen lassen und diese Automatisierung zur Unterstützung nutzen oder als Überprüfung manuell erhaltener Ergebnisse einsetzen. Resultierend erlaubt der Vorschlag in der vorgenannten Reihenfolge nach gewählter Priorität eine Verringerung der Kosten, die Beschleunigung von Arbeitsvorgängen und/oder die Verbesserung der Qualität der Ergebnisse.

## Patentansprüche

1. Verfahren für eine automatisierte Topologieerkennung einer Regeleinrichtung (300,350,500) einer elektrischen Anlage, **gekennzeichnet durch** die mittels einer Rechneranordnung durchgeführten Schritte:
- Bereitstellen einer ersten Datenstruktur, die in der Regeleinrichtung vorhandene Signalverarbeitungskomponenten (301,304,306,308,310,314,316,317,320,351,352,353,354,355) und deren Verbindungen (301,303,305,307,309,315,318,319,356,347,358,359,360,361) beschreibt, und
- Bereitstellen einer Datenbank, in der für die Signalverarbeitungskomponenten (302,304,306,308,310,314,316,317,320,351,352,353,354,355) jeweils Bestimmungsgleichungen (600) hinterlegt sind, und
- Durchprüfen der ersten Datenstruktur, wobei für jede Signalverarbeitungskomponente (301,304,306,308,310,314,316,317,320,351,352,353,354,355) die jeweiligen Bestimmungsgleichungen (600) aus der Datenbank ausgelesen und in einer zweiten Datenstruktur abgelegt werden.

2. Verfahren nach Anspruch 1, **dadurch gekennzeichnet, dass** in der zweiten Datenstruktur die Bestimmungsgleichungen (600) derart sortiert abgelegt werden, dass unter Berücksichtigung von Rückkoppelungsschleifen (330) zwischen den Signalverarbeitungskomponenten (302,304,306,308,310,314,316,317,320,351,352,353,354,355) die Bestimmungsgleichungen (600) für vorgelagerte Signalverarbeitungskomponenten jeweils vor den Bestimmungsgleichungen für nachgelagerte Signalverarbeitungskomponenten auslesbar sind.

3. Verfahren nach Anspruch 2, **dadurch gekennzeichnet, dass** mittels einer Simulationseinrichtung das Regelverhalten der Regeleinrichtung in einem Energienetz anhand der Bestimmungsgleichungen (600) simuliert wird.

4. Verfahren nach Anspruch 3, **dadurch gekennzeichnet, dass** mittels einer Leitstelle Steuerbefehle für steuerbare Betriebsmittel in dem Energienetz erstellt und zu den Betriebsmitteln übermittelt werden, wobei bei der Erstellung der Steuerbefehle das simulierte Regelverhalten der Regeleinrichtung (300,350,500) berücksichtigt wird.

5. Verfahren nach einem der vorhergehenden Ansprüche, **dadurch gekennzeichnet, dass** beim Durchprüfen der ersten Datenstruktur Signalverarbeitungskomponenten (302,304,306,308,310,314,316,317,320,351,352,353,354,355) und Verbindungen (301,303,305,307,309,315,318,319,356,347,358,359,360,361), die einen Signalübertragungsast in Richtung einer Ausgangskomponente bilden, als vorwärtsgerichtet markiert werden, und Signalverarbeitungskomponenten und Verbindungen, die einen Signalübertragungsast in Richtung einer bereits passierten und als vorwärtsgerichtet markierten Signalverarbeitungskomponente bilden, als rückgekoppelt markiert werden.

6. Verfahren nach Anspruch 5, **dadurch gekennzeichnet, dass** Verbindungen zwischen Signalverarbeitungskomponenten ein Ordnungsindex (O) derart zugeordnet wird, dass beginnend mit der Verbindung hinter einer Eingangskomponente mit einem Start-Ordnungsindex, jeder weiteren Verbindung zwischen nachfolgenden Signalverarbeitungskomponenten eines Signalübertragungsasts fortlaufend jeweils ein um ein Inkrement erhöhter Ordnungsindex (0) zugeordnet wird.

7. Verfahren nach Anspruch 6, **dadurch gekennzeichnet, dass** der Verbindung am Ausgang von Signalverarbeitungskomponenten mit mehreren eingangsseitigen Verbindungen zu vorgeordneten Signalverarbeitungskomponenten ein um einen ersten Offset-Wert (O_{F}) erhöhter Ordnungsindex zugeordnet wird.

8. Verfahren nach Anspruch 7, **dadurch gekennzeichnet, dass**, wenn in einem Signalübertragungsast, für den bereits ein um einen Offset-Wert (O_{F}) erhöhter Ordnungsindex vergeben wurde, eine Signalverarbeitungskomponente mit mehreren eingangsseitigen Verbindungen zu vorgeordneten Signalverarbeitungskomponenten erkannt wird,
der Verbindung am Ausgang dieser Signalverarbeitungskomponente ein um einen zweiten Offset-Wert erhöhter Ordnungsindex zugeordnet wird, wobei der zweite Offset-Wert ein Bruchteil des ersten Offset-Werts ist.

9. Anordnung für eine automatisierte Topologieerkennung von Regeleinrichtungen (300,350,500) für elektrische Energienetze, aufweisend:
- eine Rechneranordnung, die ausgebildet ist, eine erste Datenstruktur bereitzustellen, die in der Regeleinrichtung (300,350,500) vorhandene Signalverarbeitungskomponenten (302,304,306,308,310,314,316,317,320,351,352,353,354,355) und deren Verbindungen (301,303,305,307,309,315,318,319,356,347,358,359,360,361) beschreibt, und
eine Datenbank bereitzustellen, in der für die Signalverarbeitungskomponenten (302,304,306,308,310,314,316,317,320,351,352,353,354,355) jeweils Bestimmungsgleichungen (600) hinterlegt sind, und die erste Datenstruktur durchzuprüfen, wobei für jede Signalverarbeitungskomponente (302,304,306,308,310,314,316,317,320,351,352,353,354,355) die jeweiligen Bestimmungsgleichungen (600) aus der Datenbank ausgelesen und in einer zweiten Datenstruktur abgelegt werden.

10. Anordnung nach Anspruch 9, **dadurch gekennzeichnet, dass** die Rechneranordnung ausgebildet ist, in der zweiten Datenstruktur die Bestimmungsgleichungen (600) derart sortiert abzulegen, dass unter Berücksichtigung von Rückkoppelungsschleifen (330) zwischen den Signalverarbeitungskomponenten (302,304,306,308,310,314,316,317,320,351,352,353,354,355) die Bestimmungsgleichungen (600) für vorgelagerte Signalverarbeitungskomponenten jeweils vor den Bestimmungsgleichungen für nachgelagerte Signalverarbeitungskomponenten auslesbar sind.

11. Anordnung nach Anspruch 10, **dadurch gekennzeichnet, dass** eine Simulationseinrichtung ausgebildet ist, das Regelverhalten der Regeleinrichtung (300,350,500) in einem Energienetz anhand der Bestimmungsgleichungen zu simulieren.

12. Anordnung nach Anspruch 11, **dadurch gekennzeichnet, dass** eine Leitstelle ausgebildet ist, Steuerbefehle für steuerbare Betriebsmittel in dem Energienetz zu erstellen und zu den Betriebsmitteln zu übermitteln, wobei bei der Erstellung der Steuerbefehle das simulierte Regelverhalten der Regeleinrichtung (300,350,500) berücksichtigt wird.

13. Anordnung nach Anspruch 12, **dadurch gekennzeichnet, dass** die Rechneranordnung ausgebildet ist, beim Durchprüfen der ersten Datenstruktur Signalverarbeitungskomponenten (302,304,306,308,310,314,316,317,320,351,352,353,354,355) und Verbindungen (301,303,305,307,309,315,318,319,356,347,358,359,360,361), die einen Signalübertragungsast in Richtung einer Ausgangskomponente bilden, als vorwärtsgerichtet zu markieren, und Signalverarbeitungskomponenten und Verbindungen, die einen Signalübertragungsast in Richtung einer bereits als vorwärtsgerichtet markierten Signalverarbeitungskomponente bilden, als rückgekoppelt zu markieren.

14. Anordnung nach Anspruch 13, **dadurch gekennzeichnet, dass** die Rechneranordnung ausgebildet ist, den Verbindungen zwischen Signalverarbeitungskomponenten einen Ordnungsindex (O_{F}) derart zuzuordnen, dass, beginnend mit der Verbindung am Ausgang einer Eingangskomponente mit einem Start-Ordnungsindex, jeder weiteren Verbindung zwischen nachfolgenden Signalverarbeitungskomponenten eines Signalübertragungsasts fortlaufend jeweils ein um ein Inkrement erhöhter Ordnungsindex zugeordnet wird.

15. Anordnung nach Anspruch 14, **dadurch gekennzeichnet, dass** die Rechneranordnung ausgebildet ist, der Verbindung am Ausgang von Signalverarbeitungskomponenten mit mehreren eingangsseitigen Verbindungen zu vorgeordneten Signalverarbeitungskomponenten einen um einen ersten Offset-Wert (O_{F}) erhöhten Ordnungsindex zuzuordnen.
